# EUROPÄISCHE PATENTANMELDUNG

(11) **EP 1 523 886 A1**
(43) Veröffentlichungstag der Anmeldung: **20.04.2005**
(21) Anmeldenummer: 04450194.8
(22) Anmeldetag: 15.10.2004
(51) Int. Cl.: A01K 85/02

(54) **Fischerei-Köder**

(30) Priorität: 17.10.2003 AT 16452003
(71) Anmelder: Kovacs, Franz, 7122 Gols (AT)
(72) Erfinder: Kovacs, Franz, 7122 Gols (AT)
(74) Vertreter: Miksovsky, Alexander, Dipl.-Ing.

(57) **Zusammenfassung**

Bei einem Fischerei-Köder mit einem Köderkörper und wenigstens einem Haken, wobei der Haken in dem Köderkörper um eine Achse verschwenkbar eingesetzt ist und der Haken (3) aus einem Material ausgebildet ist, welches ein gegenüber dem Material des Köders (2) verschiedenes, spezifisches Gewicht aufweist, ist vorgesehen, daß der Haken (3) aus einem schwenkbar am Köderkörper festgelegten Gewichtselement und wenigstens einem insbesondere stangenförmigen Fortsatzteil (5) ausgebildet ist, daß die Schwenkachse (7) des Hakens (3) außermittig durch das Gewichtsteil (4) verläuft, daß am Außenumfang des Gewichtsteils (4) ein Festlegungselement, insbesondere eine Öse (9), für eine Angelschnur (8) vorgesehen ist und daß das Festlegungselement (9) in Richtung zum Fortsatzteil (5) in bezug auf die Schwenkachse (7) versetzt angeordnet ist, wodurch der Fangerfolg und das sichere Verhaken bei einfacher Konstruktion verbessert werden kann.

## Beschreibung

Die vorliegende Erfindung bezieht sich auf einen Fischerei-Köder mit einem Köderkörper und wenigstens einem Haken, wobei der Haken in dem Köderkörper um eine Achse verschwenkbar eingesetzt ist und der Haken aus einem Material ausgebildet ist, welches ein gegenüber dem Material des Köders verschiedenes, spezifisches Gewicht aufweist.

Beim Fischen ist es eine bekannte Tatsache, daß sich Fische vor allem von Ködern anlocken lassen und nach diesen schnappen und als lebendige Fische zu verschlingen trachten, je lebensechter sie aussehen. An den Ködern sind üblicherweise scharfe, insbesondere spitze Fanghaken festgelegt, wobei diese entweder in Verlängerung des Köders an seinem Ende festgelegt sind oder an der Außenseite desselben angebracht sind, um sich im Maul des zu fangenden Fisches zu verhaken. Der Nachteil dieser bekannten Köder ist, daß Fische, insbesondere Raubfische, sehr häufig in der Lage sind, Fremdkörper am Äußeren des Köders zu erkennen, und insbesondere dann, wenn die Köder nicht sehr lebensecht aussehen, nach diesen überhaupt nicht schnappen, so daß der Fangerfolg mit bekannten Ködern nicht den gewünschten Effekt bzw. die gewünschte Wirkung erreicht.

Ein Fischerei-Köder der eingangs genannten Art ist beispielsweise der US-PS 3,060,619 oder der US-PS 5,010,679 bekannt geworden, wobei mit aufwendigen Konstruktionen versucht wird, ein Austreten des Hakens aus einem Köderkörper im wesentlichen erst bei bzw. nach einem Anbiß eines Fisches zu erzielen.

Abgewandelte Ausführungsformen von Fischerei-Ködern sind beispielsweise der US-A 4,656,755 oder der US-A 4,760,665 zu entnehmen, wobei jeweils ein zum Köderkörper um eine Achse verschwenkbarer Haken vorgesehen ist. Diese bekannten Ausführungsformen sind insbesondere dadurch nachteilig, daß eine aufwendige, mechanische Konstruktion zur Beaufschlagung des Hakens und insbesondere zum Verhindern eines Austretens des Hakens erforderlich ist.

Die vorliegende Erfindung zielt nun darauf ab, einen Fischerei-Köder zur Verfügung zu stellen, durch welchen der Fangerfolg verbessert werden kann und auch die Sicherheit des Verhakens des Fanghakens im Maul des zu fangenden Fisches bei einfacher Konstruktion des Köders erhöht werden kann.

Zur Lösung dieser Aufgaben ist ein Fischerei-Köder der eingangs genannten Art im wesentlichen dadurch gekennzeichnet, daß der Haken aus einem schwenkbar am Köderkörper festgelegten Gewichtselement und wenigstens einem insbesondere stangenförmigen Fortsatzteil ausgebildet ist, daß die Schwenkachse des Hakens außermittig durch das Gewichtsteil verläuft, daß am Außenumfang des Gewichtsteils ein Festlegungselement, insbesondere eine Öse, für eine Angelschnur vorgesehen ist und daß das Festlegungselement in Richtung zum Fortsatzteil in bezug auf die Schwenkachse versetzt angeordnet ist. Da der Haken in den Köderkörper eingesetzt ist, kann der Haken von vorneherein von dem zu fangenden Fisch nicht erblickt werden, so daß die Täuschung und das lebensechte Aussehen des Köders gegenüber bekannten Ködern deutlich verbessert werden kann. Dadurch, daß der Haken in dem Köderkörper um eine Achse verschwenkbar eingesetzt ist, kann gewährleistet werden, daß nach Zubeißen eines zu fangenden Fisches der Haken entsprechend verschwenkt wird und im Fischmaul verrastet bzw. verhakt wird. Falls der Haken aus einem Material mit einem gegenüber dem Material des Köders erhöhten, spezifischen Gewicht ausgebildet wird, ergibt sich automatisch, daß sich bei einem Eintauchen des Köderkörpers ins Wasser der Haken bzw. Fanghaken durch sein eigenes Gewicht aufgrund der Schwerkraft in das Innere eines nach oben offenen Köderschlitzes sinkt und insgesamt der Köderkörper absinkt. Gleichzeitig wirkt der natürliche Auftrieb des ein geringeres, spezifisches Gewicht aufweisenden Köderkörpers dem Gewicht des Hakens entgegen, so daß, der Haken vollständig im Schlitz des Köders verborgen bleibt. Bei einem Biß eines Fisches auf den Köder entsteht am Kunstköder ein Widerstand und der Fanghaken wird aufgrund der erfindungsgemäß vorgesehenen Anlenkung im Köderkörper sowie durch die erfindungsgemäß vorgeschlagene relative Positionierung zwischen der Schwenkachse des Hakens und dem Festlegungselement für eine Angelschnur zum Ausschwenken gebracht, so daß ein sicheres Einhaken im Fischmaul sichergestellt wird. Alternativ kann vorgesehen sein, daß der Haken aus dem Köderkörper nach unten austritt, so daß wiederum durch das verschiedene, spezifische Gewicht zwischen dem Material des Köders und dem Material des Hakens in entsprechenden Fanglagen ein sicheres Hervortreten des Hakens erzielbar ist.

Dadurch, daß erfindungsgemäß die Schwenkachse des Hakens außermittig durch das Gewichtsteil verläuft, wird sichergestellt, daß, wenn ein Zug auf das Gewichtsteil ausgeübt wird, das stangenförmige Fortsatzteil möglichst weit aus dem Köderkörper heraus verschwenkt wird und sicher in dem Fischmaul verhakt wird.

Anders als bei gängigen Fischerei-Ködern, bei welchen eine Öse für die Angelschnur an dem Köder selbst angelenkt ist, ist bei dem erfindungsgemäßen Fischerei-Köder darüber hinaus am Außenumfang des Gewichtsteils ein Festlegungselement, insbesondere eine Öse, für eine Angelschnur vorgesehen. Dadurch, daß eine Öse bzw. ein Festlegungselement für eine Angelschnur an dem Gewichtsteil des Hakens festgelegt ist, kann eine besonders sichere Verschwenkung des Hakens, insbesondere seines stangenförmigen Fortsatzteils, sichergestellt werden, wobei, wenn ein Fisch angebissen hat, durch Ziehen an der Angelschnur der Haken unter Berücksichtigung der erfindungsgemäß vorgeschlagenen relativen Positionierung zwischen der Schwenkachse und dem Festlegungselement sicher aus dem Köderkörper heraus verschwenkt wird, wodurch ein Verhaken in dem Fischmaul noch sicherer gelingen wird und insgesamt eine bessere Drillmöglichkeit gegeben ist.

Da erfindungsgemäß das Festlegungselement in Richtung zum Fortsatzteil in bezug auf die Schwenkachse versetzt angeordnet ist, wird der Anlenkwinkel zugunsten einer Herausverschwenkung des Fortsatzteils weiter verbessert, so daß ein entsprechend weites Herausverschwenken des Fortsatzteils sichergestellt und eine sichere Verrastung des Fortsatzteils des Hakens in dem Fischmaul gewährleistet werden kann.

Wesentlich im vorliegenden Zusammenhang ist die Tatsache, daß auf technisch aufwendige bzw. komplizierte Mittel zum Ausbringen bzw. Austreten des Hakens aus dem Köderkörper verzichtet werden kann, wie dies im Stand der Technik erforderlich war.

Gemäß einer weiters bevorzugten Ausführungsform ist vorgesehen, daß der Haken als Flachschenkel konstruiert ist, wodurch ein möglichst einfaches Eintreten bzw. Einbringen in das Innere des Köderkörpers möglich wird.

Selbst bei einem Fehlbiß gelangt aufgrund des unterschiedlichen, spezifischen Gewichts zwischen dem Haken und dem Köderkörper dieser wiederum im wesentlichen selbsttätig in das Innere des Köderkörpers und ist somit unmittelbar einsatzbereit.

Gemäß einer bevorzugten Weiterbildung ist der Fischerei-Köder derart ausgebildet, daß das Gewichtselement des Hakens aus einem zylinder- oder kugelförmigen Element gebildet ist. Dadurch, daß der Haken aus einem schwenkbar am Köderkörper festgelegten Gewichtselement, insbesondere einem zylinder- oder kugelförmigen Element oder dgl., und wenigstens einem insbesondere stangenförmigen Fortsatzteil ausgebildet ist, wird sichergestellt, daß der Haken in dem Fischmaul aus dem Köder heraus verschwenkt wird.

Dadurch, daß bevorzugt das Gewichtsteil unverlierbar in den Köderkörper eingesetzt ist, kann darüber hinaus dafür Sorge getragen werden, daß, wenn auf den Köder ein Zug ausgeübt wird, d.h. nach dem Anbeißen eines Fisches, der Köder durch diesen Zug nicht zerstört wird, sondern einstückig mit dem Haken ausgebildet verbleibt.

Zur Erzielung des erfindungsgemäß vorgesehenen, verschiedenen, spezifischen Gewichts zwischen dem Köderkörper und dem Haken ist gemäß einer weiters bevorzugten Ausführungsform vorgesehen, daß im bzw. am Haken und/oder dem Köderkörper ein Gewicht, insbesondere ein Bleigewicht vorgesehen ist.

Durch Integration bzw. Aufnahme eines Gewichts, insbesondere eines Bleigewichts, im bzw. am Haken und/oder dem Köderkörper kann entsprechend der unterschiedlichen Anordnung des Schlitzes bzw. der Aufnahmeöffnung für den Haken entweder am oberen bzw. am unteren Teil des Köderkörpers sichergestellt werden, daß zur Erzielung eines ordnungsgemäßen Fangergebnisses durch das unterschiedliche, spezifische Gewicht der Haken in der Fangstellung jeweils aus dem Köderkörper, gegebenenfalls unter Unterstützung eines daran angelegten Zugseils austritt.

Die Unterstützung des Effekts zur Einnahme der verschiedenen Fangstellungen bei für unterschiedliche Einsatzzwecke entweder nach oben oder nach unten austretende Haken bzw. Hakenelement wird dadurch unterstützt, daß im bzw. am Haken und/oder dem Köderkörper ein Auftriebskörper integriert ist, wie dies einer weiters bevorzugten Ausführungsform des erfindungsgemäßen Fischerei-Köders entspricht.

Gemäß einer bevorzugten Weiterbildung ist der Fischerei-Köder dadurch gekennzeichnet, daß an dem wenigstens einen stangenförmigen Fortsatzteil des Hakens ein oder mehrere Fanghaken angelenkt ist bzw. sind, welche insbesondere in Richtung zum Gewichtsteil gekrümmt bzw. aufgebogen sind. Indem an dem stangenförmigen Fortsatzteil ein oder mehrere Fanghaken angelenkt ist bzw. sind und nicht das Fortsatzteil selbst als Haken ausgebildet ist, kann ein besseres und sicheres Verrasten des stangenförmigen Fortsatzteils in dem Fischmaul sichergestellt werden. Wenn, wie dies ebenfalls einer bevorzugten Weiterbildung der Erfindung entspricht, der Fanghaken in Richtung zum Gewichtsteil gekrümmt bzw. aufgebogen ausgebildet ist, wird insbesondere, wenn ein Zug auf die Angelschnur ausgeübt wird, ein tiefes Eindringen der Fanghaken in das Fischmaul gewährleistet, so daß es einem Fisch, der an den Köder angebissen hat, kaum mehr möglich ist, den Köder loszulassen und dem Angler zu entkommen.

Um beim Fischfang, insbesondere auf Raubfische, den Fischen ein möglichst natürliches Aussehen des Köders vor Augen zu führen, ist gemäß einer weiters bevorzugten Weiterbildung das wenigstens eine stangenförmige Fortsatzteil in Schlitzen bzw. Ausnehmungen des Köderkörpers aufnehmbar angeordnet. Durch diese Art der Anordnung gelingt es, den Haken insbesondere mit den daran angelenkten Fanghaken in dem Köderkörper bei Auswerfen der Angelschnur und bei Bewegen des Köders im Wasser unsichtbar aufzunehmen, so daß einem zu fangenden Fisch den Eindruck eines lebendigen, kleinen Fisches vermittelt wird und der zu fangende Fisch nicht, wie dies bei herkömmlichen Ködern gemäß dem Stand der Technik ist, vor dem Anbeißen den Haken erkennen kann.

Um eine noch größere Wahrscheinlichkeit zu erzielen, daß ein Fisch an dem Köder anbeißt, ist gemäß einer bevorzugten Weiterbildung der Köder in an sich bekannter Weise als aus Kunststoff hergestellter Fisch ausgebildet, wobei das Gewichtsteil im Kopf des Fisches und das (die) Fortsatzteil(e) im Körper des Fisches aufgenommen ist (sind). Durch eine derartige Weiterbildung wird der Köder durch die Angelschnur wie ein lebendiger Fisch durch das Wasser gezogen und insbesondere verhindert, daß durch Anlenkung der Angelschnur an Mittelteilen des Köderkörpers eine unnatürliche Bewegung des Köderkörpers, d.h. eine Bewegung, welche nicht einem lebendigen, kleinen Fisch entspricht, erzeugt wird.

Die Erfindung ist nachfolgend anhand von in der Zeichnung schematisch dargestellten Ausführungsbeispielen näher erläutert, in welchen:
Fig. 1 einen Schnitt durch einen Fischerei-Köder mit einem Köderkörper und einem Haken gemäß der vorliegenden Erfindung darstellt;
Fig. 2 eine Draufsicht von oben auf einen Fischerei-Köder gemäß einer abgewandelten Ausführungsform darstellt;
Fig. 3 eine andere Schnittansicht des Fischerei-Köders darstellt, bei welchem der Haken teilweise aus dem Köderkörper heraus verschwenkt ist;
Fig. 4 in einer zu Fig. 1 ähnlichen Darstellung einen Schnitt durch eine abgewandelte Ausführungsform eines Fischerei-Köders mit einem unten aus dem Köderkörper austretenden Haken;
Fig. 5 in einer zu Fig. 4 ähnlichen Darstellung den Fischerei-Köder gemäß Fig. 4, wobei der Haken wenigstens teilweise aus dem Köderkörper nach unten ausgetreten ist; und
Fig. 6 eine Seitenansicht einer abgewandelten Ausführungsform eines nach unten aus einem nicht näher dargestellten Köderkörper austretenden Hakens.

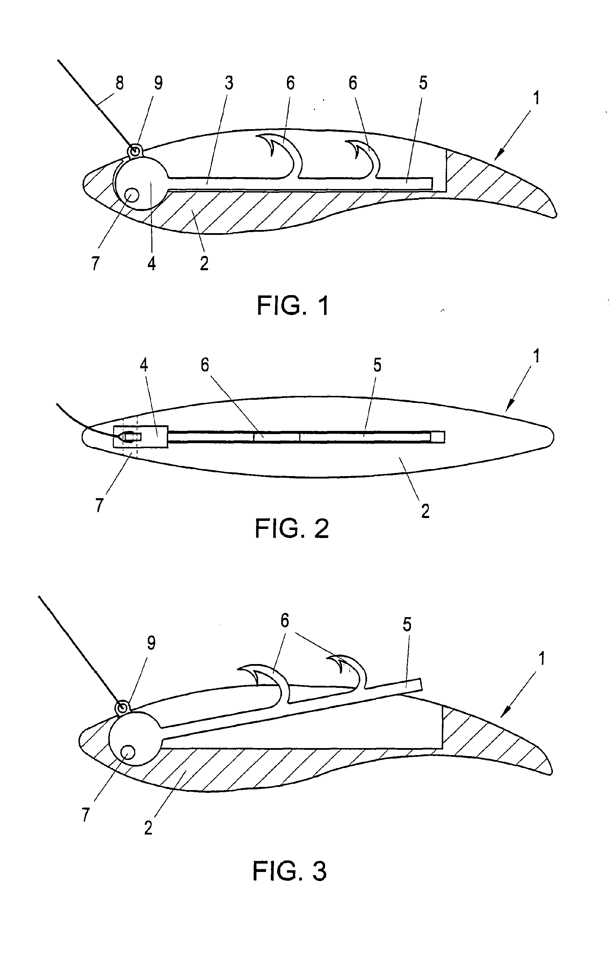

In Fig. 1 mit 1 allgemein ein Fischerei-Köder bezeichnet, wobei in einem Köderkörper 2 ein Haken 3 eingesetzt aufgenommen ist. Der Haken 3 ist hiebei aus einem Gewichtselement bzw. -teil 4 und einem stangenförmigen Fortsatz 5 ausgebildet, wobei an dem stangenförmigen Fortsatz 5 insbesondere in Richtung zu dem Gewichtsteil 4 gekrümmte Fanghaken 6 festgelegt bzw. angelenkt sind. Das Gewichtsteil 4 ist in dem Köderkörper 2 vollständig aufgenommen und ist in diesem Köderkörper 2 über eine exzentrisch ausgebildete bzw. außermittig angeordnete Anlenkachse 7 aus dem bzw. in den Köderkörper 2 verschwenkbar ausgebildet.

Die Verschwenkbewegung des Hakens 3 bzw. insbesondere des stangenförmigen Fortsatzes 5 des Hakens 3 wird durch einen Zug einer schematisch angedeuteten Angelschnur 8, welche an einer Öse 9 des Gewichtsteils 4 festgelegt ist, erzielt, wobei durch einen Zug mit der Angelschnur 8 über die Öse 9 das stangenförmige Fortsatzteil 5 aus dem Köderkörper 2 herausgeschwenkt wird und insbesondere die in Richtung zum Gewichtsteil gekrümmten Fanghaken 6 in einem Maul eines Fisches verhakt bzw. verrastet werden, wie dies insbesondere aus Fig. 3 deutlich ersichtlich ist.

In der Draufsicht auf den Köder von Fig. 2 sind dieselben Elemente mit denselben Bezugszeichen versehen, wobei hier eine Ausbildung mit nur einem Fanghaken 6 gezeigt ist und die Schwenkachse 7 des Gewichtsteils 4 ebenso wie ihre Festlegung in dem Köderkörper 2 deutlich ersichtlich ist. In Fig. 3 ist ein Zustand gezeigt, in welchem der Haken teilweise aus dem Köderkörper 2 heraus verschwenkt ist, wobei eine umso größere und einfachere Verschwenkung erzielt werden kann, je weiter das Festlegungselement 9 in Richtung zum Fortsatzteil 5 in bezug auf die Schwenkachse 7 versetzt ist. Je größer der Abstand zwischen der Schwenkachse 7 und dem Festlegungselement bzw. der Öse 9 ist, desto leichter kann eine Verschwenkung des Fortsatzteils 5 erzielt werden und desto größer ist der Winkel, um welchen das Fortsatzteil 5 aus dem Köderkörper 2 heraus verschwenkbar ist.

Mit Hilfe des erfindungsgemäßen Fischerei-Köders wird es möglich, daß ein Fangwinkel von 100 % erreicht werden kann. Der Köder 1 sinkt aufgrund des Gewichts des Hakens 3 ab, wobei aufgrund des Gewichts des Hakens 3 dieser in den Schlitz bzw. die Ausnehmung des Köderkörpers 2 eintritt und im Inneren des Köderkörpers 2 verborgen bleibt, bis ein Fisch anbeißt. Gleichzeitig wirkt der Auftrieb des Köderkörpers 2 entgegen, so daß zuverlässig der Fanghaken 3 im Köderkörper 2 verborgen bleibt.

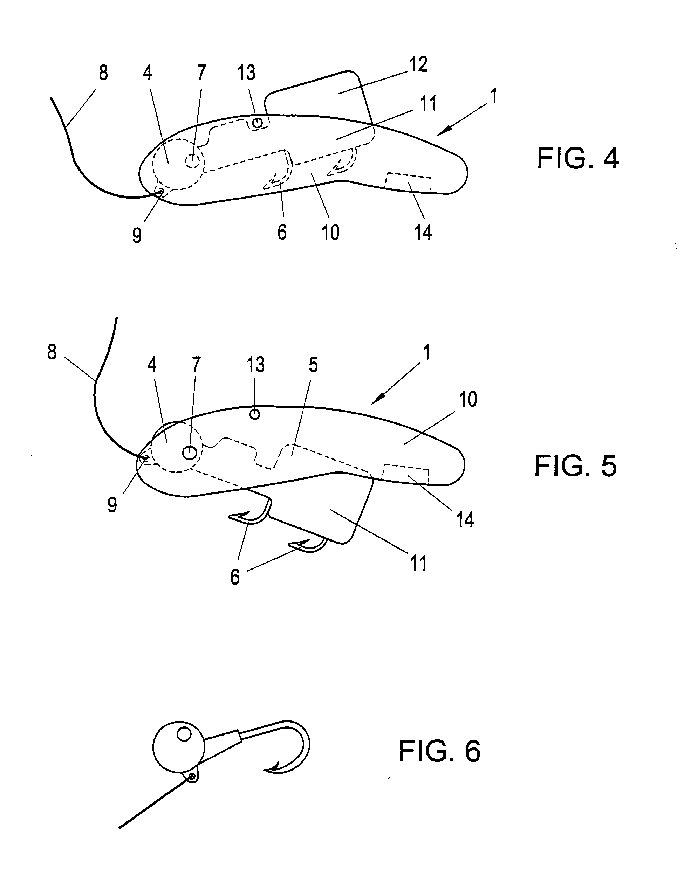

In den Fig. 4 und 5 ist eine abgewandelte Ausführungsform eines Fischerei-Köders 1 dargestellt, wobei in einem Köderkörper 10 ein wiederum von einem Flachschenkel gebildeter Haken 11 aufgenommen ist, wobei im Gegensatz zu der Ausführungsform gemäß den Fig. 1 bis 3 der Haken bzw. Flachschenkel 11 nach unten aus dem Köderkörper 10 in eine Einsatzlage austritt bzw. vorragt. Der Haken bzw. Flachschenkel 11 ist wiederum um eine außermittig angeordnete Schwenkachse 7 im Köderkörper 10 gelagert, wobei wiederum eine mit 9 bezeichnete Öse für eine Angelschnur 8 vorgesehen ist.

In der in Fig. 4 dargestellten Lage befindet sich der Haken 11 vollständig im Inneren des Köderkörpers 10, wobei zusätzlich ein auftreibender Teil in Form einer Rückenflosse 12 nach oben aus dem Köderkörper 10 beim Absinken vorragt. In Fig. 4 und 5 ist weiters eine von einem Bolzen gebildete Anschlagbegrenzung 13 angedeutet. Ähnlich wie bei der vorangehenden Ausführungsform ist auch im Bereich der Schwenkachse 7 bzw. des Kopfteils ein Gewichtsteil 4 vorgesehen, wobei ergänzend auch im Köderkörper 10 ein zusätzliches Gewichtsteil, insbesondere Bleigewebe 14 integriert ist, welches eine entsprechende abtreibende Wirkung ergibt. Die effektiven Fanghaken am Flachschenkel 11 sind wie bei den vorangehenden Ausführungsformen wiederum mit 6 bezeichnet.

Beim Auswerfen des in den Fig. 4 und 5 dargestellten Fischerei-Köders befindet sich gemäß Fig. 5 der Haken bzw. der Flachschenkel 11 im Inneren des Köderkörpers 10. Durch die entsprechende Anordnung der Gewichtsteile 4 bzw. 14 bewegt sich der Fischerei-Köder in Richtung Gewässerboden, wobei wiederum beim Ziehen über die Angelschnur 8 bei einem Zubeißen eines Fisches auf den Köderkörper 10 durch die Hebelwirkung die Fanghaken 6 entsprechend der in Fig. 5 dargestellten Position austreten und sich im Fischmaul verfangen. Bei einem Fehlbiß verbirgt sich aufgrund der Gewichtsverteilung mit unterschiedlichem spezifischen Gewicht zwischen dem Haken 11 und dem Köderkörper 10 der Haken 11 wieder in der Köderhülle bzw. dem Köderkörper 10, so daß ein sofortiges Weiterangeln ermöglicht wird.

## Patentansprüche

1. Fischerei-Köder mit einem Köderkörper und wenigstens einem Haken, wobei der Haken in dem Köderkörper um eine Achse verschwenkbar eingesetzt ist und der Haken (3, 11) aus einem Material ausgebildet ist, welches ein gegenüber dem Material des Köders (2, 10) verschiedenes, spezifisches Gewicht aufweist, **dadurch gekennzeichnet, daß** der Haken (3, 11) aus einem schwenkbar am Köderkörper festgelegten Gewichtselement und wenigstens einem insbesondere stangenförmigen Fortsatzteil (5) ausgebildet ist, daß die Schwenkachse (7) des Hakens (3, 11) außermittig durch das Gewichtsteil (4) verläuft, daß am Außenumfang des Gewichtsteils (4) ein Festlegungselement, insbesondere eine Öse (9), für eine Angelschnur (8) vorgesehen ist und daß das Festlegungselement (9) in Richtung zum Fortsatzteil (5) in bezug auf die Schwenkachse (7) versetzt angeordnet ist.

2. Fischerei-Köder nach Anspruch 1, **dadurch gekennzeichnet, daß** der Haken (3, 11) als Flachschenkel ausgebildet ist.

3. Fischerei-Köder nach Anspruch 1 oder 2, **dadurch gekennzeichnet, daß** das Gewichtselement aus einem zylinder- oder kugelförmigen Element (4) gebildet ist.

4. Fischerei-Köder nach Anspruch 1, 2 oder 3, **dadurch gekennzeichnet, daß** das Gewichtsteil (4) unverlierbar in den Köderkörper (2, 10) eingesetzt ist.

5. Fischerei-Köder nach einem der Ansprüche 1 bis 4, **dadurch gekennzeichnet, daß** im bzw. am Haken (3, 11) und/oder dem Köderkörper (2, 10) ein Gewicht (4, 14), insbesondere ein Bleigewicht ist.

6. Fischerei-Köder nach einem der Ansprüche 1 bis 5, **dadurch gekennzeichnet, daß** im bzw. am Haken (11) und/oder dem Köderkörper (10) ein Auftriebskörper (12) integriert ist.

7. Fischerei-Köder nach einem der Ansprüche 1 bis 6, **dadurch gekennzeichnet, daß** an dem wenigstens einen stangenförmigen Fortsatzteil (5) des Hakens (3, 11) ein oder mehrere Fanghaken (6) angelenkt ist bzw. sind, welche insbesondere in Richtung zum Gewichtsteil (4) gekrümmt bzw. aufgebogen sind.

8. Fischerei-Köder nach einem der Ansprüche 1 bis 7, **dadurch gekennzeichnet, daß** das wenigstens eine stangenförmige Fortsatzteil (5) in Schlitzen bzw. Ausnehmungen des Köderkörpers (2, 10) aufnehmbar angeordnet ist.

9. Fischerei-Köder nach einem der Ansprüche 1 bis 8, **dadurch gekennzeichnet, daß** der Köder (1) in an sich bekannter Weise als aus Kunststoff hergestellter Fisch ausgebildet ist, wobei das Gewichtsteil im Kopf des Fisches und das (die) Fortsatzteil(e) (5) im Körper des Fisches aufgenommen ist (sind).
